# EUROPÄISCHE PATENTSCHRIFT

(11) **EP 2 492 919 B1**
(45) Veröffentlichungstag und Bekanntmachung des Hinweises auf die Patenterteilung: **26.06.2013**
(21) Anmeldenummer: 12154059.5
(22) Anmeldetag: 06.02.2012
(51) Int. Cl.: G21C 19/32, G21F 9/28, G21F 9/34

(54) **Verfahren zum Zerlegen eines aktivierten hohlzylindrischen Behälters einer nukleartechnischen Anlage**
Method for disassembling an active hollow cylinder container of a nuclear facility
Procédé destiné à découper un récipient cylindrique creux activé d'une installation nucléaire

(30) Priorität: 24.02.2011 DE 102011004659
(43) Veröffentlichungstag der Anmeldung: 29.08.2012
(73) Patentinhaber: AREVA GmbH, 91052 Erlangen (DE)
(72) Erfinder: Arnold, Hans-Uwe, 63739 Aschaffenburg (DE)
(74) Vertreter: Meissner, Bolte & Partner

(56) Entgegenhaltungen:
- DE-A1- 3 916 186
- DE-C2- 4 437 276
- US-A- 5 001 870

## Beschreibung

Die Erfindung bezieht sich auf ein Verfahren zum Zerlegen eines aktivierten hohlzylindrischen Behälters einer nukleartechnischen Anlage, insbesondere auf ein Verfahren zum Zerlegen eines Reaktordruckbehälters.

Beim Rückbau einer stillgelegten nukleartechnischen Anlage, beispielsweise eines Kernkraftwerkes, gibt es eine Vielzahl radioaktiver Anlagenteile, die auch nach dem Durchführen einer chemischen oder mechanischen Dekontamination, d.h. nach dem Entfernen einer oberflächlichen Kontamination radioaktiv sind, da sie im Laufe ihrer Einsatzzeit unter dem Einfluss der beim Reaktorbetrieb entstehenden Neutronenstrahlung aktiviert sind. Diese aktivierten Anlagenteile müssen deshalb nach ihrer Zerlegung einer aufwändigen Endlagerung zugeführt werden. Das Ausmaß einer solchen Aktivierung ist jedoch innerhalb der Wand des Behälters nicht konstant sondern ist im nahe an der Innenoberfläche liegenden Wandbereich höher als in den äußeren Wandbereichen, so dass gemeinsam mit dem hochaktivierten Material auch niedrigaktiviertes Material der Endlagerung zugeführt werden würde. Um die Menge des einer Endlagerung zuzuführenden Materials zu verringern, ist deshalb in der DE 44 37 276 C2 vorgeschlagen worden, die hochaktivierten Wandbereiche von den niedrigaktivierten Wandbereichen zu trennen, indem die hochaktivierten inneren Wandbereiche des Behälters unter spanender Zerkleinerung schichtweise bis in die Nähe eine minimalen Aktivitätswertes abgetragen werden. Ein solches spanabhebendes Abtragsverfahren stößt jedoch schnell an praktische Grenzen, da ein großes hochaktiviertes Spanvolumen entsteht, das nur mit hohem Aufwand gehandhabt werden kann.

Der Erfindung liegt deshalb die Aufgabe zu Grunde, ein Verfahren zum Zerlegen eines aktivierten hohlzylindrischen Behälters einer nukleartechnischen Anlage, insbesondere eines Reaktordruckbehälters anzugeben, mit dem hochaktivierte Wandbereiche des Behälters und niedrigaktivierte Wandbereichen mit technisch vertretbarem Aufwand voneinander getrennt werden können, und bei dem das Volumen des beim Zerlegen entstehenden Sekundärabfalles möglichst gering ist.

Die genannte Aufgabe wird gelöst mit einem Verfahren mit den Merkmalen des Patentanspruches 1. Gemäß diesem Verfahren wird der Behälter in einem ersten Schritt in Wandteile zerlegt, die aus Umfangsabschnitten eines ringförmigen Segmentes des Behälters gebildet sind, und es wird in einem zweiten Schritt mit einem in Umfangsrichtung verlaufenden Sägeschnitt ein innerer Bereich des Wandteils von einem äußeren Bereich getrennt wird.

Durch diese Maßnahmen wird einerseits die Menge des beim Zerlegen entstehenden Sekundärabfalls verringert, da diese in Form von Spänen nur durch das Volumen der beim Sägen entstehenden Schnittfuge gebildet ist. Andererseits ist die Aktivität des bei einem Sägeschnitt entstehenden Sekundärabfalles signifikant geringer als die Aktivität der inneren Wandbereiche, so dass dessen Handhabung entsprechend vereinfacht ist. Darüber hinaus liegen die hochaktivierten Bestandteile des Behälters in einer kompakten Form als Abschnitte eines ringförmigen Segmentes vor und können deshalb einfacher gehandhabt und einer Endlagerung zugeführt werden.

Vorzugsweise wird der Sägeschnitt mit einer Bandsäge durchgeführt, mit der es möglich ist, Sägeschnitte auch in Abschnitte mit relativ großer Bauhöhe einzubringen.

In einer weiteren vorteilhaften Ausgestaltung wird während des Sägens die Aktivität der beim Sägen entstehenden Späne gemessen, und es wird bei Über- oder Unterschreiten vorgegebener Grenzwerte der Abstand des Sägeschnittes von der Innenoberfläche vergrößert beziehungsweise verringert.

Zur weiteren Erläuterung der Erfindung wird auf die Figuren verwiesen. Es zeigen:
Fig. 1 einen Querschnitt durch die Wand eines Reaktordruckbehälters in einer Teildarstellung,
Fig. 2 ein Diagramm in dem die lokale Aktivität innerhalb der Wand gegen den Abstand von der Innenoberfläche aufgetragen ist,
Fig. 3 ein zum Zersägen gemäß der vorliegenden Erfindung vorgesehenes Wandteil in einer perspektivischen Darstellung.

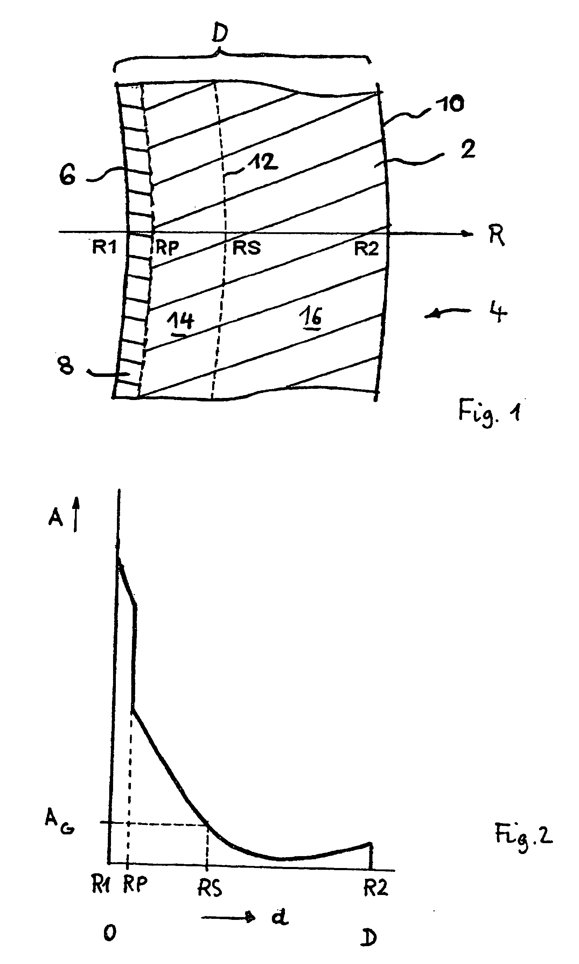

Fig. 1 zeigt einen Querschnitt durch die Wand 2 eines hohlzylindrischen Behälters 4, im Beispiel ein Reaktordruckbehälter, der an seiner Innenoberfläche 6 mit einer Plattierung 8 versehen ist. In der Fig. 1 sind die Radien unterschiedlicher konzentrischer Zonen der Wand 2 eingetragen. Mit R1 ist der Radius der Innenoberfläche 6 bezeichnet. RP bezeichnet den Radius der innenliegenden Grenzfläche zwischen der Plattierung 8 und dem Grundmaterial der Wand 2. Mit R2 ist der Radius der Außenoberfläche 10 und mit D die Wanddicke D=R2-R1 bezeichnet. Gestrichelt eingezeichnet ist bei einem Radius RS eine Trennlinie 12, die einen inneren, hochaktivierten Wandbereich 14 von einem niedrigaktivierten äußeren Wandbereich 16 trennt. Die Lage der Trennlinie 12 ist so gewählt, dass die Aktivität im gesamten äußeren Wandbereich 16 so niedrig ist, dass diese unterhalb eines vorgegebenen Grenzwertes A_{G} (Fig. 2) liegt, bis zu dem es je nach genehmigungsrechtlichen Voraussetzungen möglich ist, aktivierte Komponenten gegebenenfalls nach einer zusätzlichen Abklingzeit zu rezyklieren, d.h. einer weiteren Verwendung zuzuführen. Demgegenüber muss der hochaktivierte innere Wandbereich 14 einer Endlagerung zugeführt werden. Diese Trennlinie 12 befindet sich auch nicht zwingend über die gesamte Bauhöhe und am gesamten Umfang des Behälters 4 im gleichen Abstand zur Innenoberfläche 6, da unterschiedliche Bereiche des Behälters 4 während des Betriebs in der Regel unterschiedlicher Neutronenstrahlung ausgesetzt sind.

Fig. 2 zeigt ein typisches Aktivitätsprofil der Wand eines Reaktordruckbehälters. Im Bereich der Plattierung, d.h. im Wandbereich zwischen RP und R1 liegt eine besonders hohe Aktivität A vor, die sprunghaft an der Grenze zwischen Plattierung und Grundwerkstoff abnimmt. Mit zunehmendem Radius beziehungsweise zunehmendem Abstand d von der Innenoberfläche nimmt die Aktivität weiter ab, bis sie beim Radius RS den vorgegebenen Grenzwert A_{G} unterschreitet und nach einem Minimum erneut bis zur Außenoberfläche ansteigt. Dieser Anstieg wird im Wesentlichen verursacht durch die Rückstreuung von Neutronen am außerhalb des Reaktordruckbehälters angeordneten biologischen Schild.

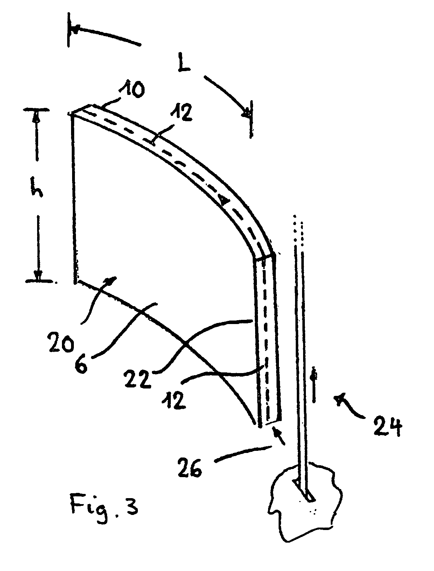

Gemäß Fig. 3 ist in einem ersten Schritt ein Wandteil 20 aus dem Behälter 4 durch vorhergehende Sägeschnitte herausgeschnitten worden, indem dieser zunächst durch einen horizontalen Schnitt in ringförmige Segmente der Bauhöhe h zerlegt worden ist, aus denen wiederum durch vertikale Schnitte die Wandteile 20 bildende Umfangsabschnitte der Länge L herausgetrennt worden sind.

Durch Messung der Aktivität des Wandmaterials in Abhängigkeit vom Radius, beispielsweise durch Probenentnahme an den Seitenkanten eines jeden Wandteils 20, kann zumindest die Anfangslage der Trennlinie 12 und damit des Sägeschnittes festgelegt werden, der in Umfangsrichtung und parallel zu einer senkrecht zur Umfangsrichtung verlaufenden Kante 22 mit einer Bandsäge 24 erfolgt. Darüber hinaus kann während des Sägens die Aktivität der beim Sägen entstehenden Späne gemessen werden. Überschreitet oder Unterschreitet deren Aktivität den vorgegebene Grenzwert A_{G}, in der Praxis ein oberer und ein unterer Grenzwert eines Toleranzbandes, kann der Radius RS in der Trennlinie 12, d.h. der Abstand RS-R1 des Sägeschnittes von der Innenoberfläche 6 während des Sägens vergrößert beziehungsweise verkleinert werden.

Durch einen Vorschub der Bandsäge 24 in Umfangsrichtung 26 entlang der gekrümmten Trennlinie 12 wird der innere Wandbereich 14 des Wandteils 20 von dem äußeren Wandbereich 16 getrennt, d. h. das Wandteil 20 in ein äußeres und inneres Wandteil zerlegt, die einer getrennten Behandlung zugeführt werden können. Durch die an die Kontur des Wandteils weitgehend angepasste gekrümmte Schnittfläche ist eine optimale Trennung des hochaktivierten Wandbereiches 14 vom niedrigaktivierten Wandbereich 16 möglich, da die Schnittfuge weitgehend genau der idealen Trennlinie 12 folgen kann, die im einfachsten Fall (Aktivitätsprofil im Wandteil 20 konstant) parallel zur Innenoberfläche 6 verläuft.

## Patentansprüche

1. Verfahren zum Zerlegen eines aktivierten hohlzylindrischen Behälters (4) einer nukleartechnischen Anlage, insbesondere eines Reaktordruckbehälters, dessen Aktivität (A) an der Innenoberfläche (6) höher ist als an der Außenoberfläche (10), bei dem dieser in einem ersten Schritt in Wandteile (20) zerlegt wird, die aus Umfangsabschnitten eines ringförmigen Segmentes des Behälters (4) gebildet sind, **dadurch gekennzeichnet, dass** in einem zweiten Schritt mit einem in Umfangsrichtung (26) verlaufenden Sägeschnitt ein innerer Wandbereich (14) des Wandteils (20) von einem äußeren Wandbereich (16) getrennt wird.

2. Verfahren nach Anspruch 1, bei dem der Sägeschnitt mit einer Bandsäge (24) durchgeführt wird.

3. Verfahren nach Anspruch 1 oder 2, bei dem während des Sägens die Aktivität (A) der beim Sägen entstehenden Späne gemessen und bei Überschreiten vorgegebener Grenzwerte der Abstand (RS-R1) des Sägeschnittes von der Innenoberfläche (6) vergrößert und bei Unterschreiten vorgegebener Grenzwerte der Abstand (RS-R1) des Sägeschnittes von der Innenoberfläche (6) verringert wird.

## Claims

1. Method for dismantling an active hollow cylindrical container (4) of a nuclear plant, in particular of a reactor pressure vessel, whose activity (A) on the inner surface (6) is greater than on the outer surface (10), wherein this is dismantled into wall sections (20) in a first step, said wall sections being formed from circumferential sections of an annular segment of the container (4), **characterised in that**, in a second step, an inner wall region (14) of the wall section (20) is separated from an outer wall region (16) with a saw cut running in the circumferential direction (26).

2. Method according to claim 1, wherein the saw cut is carried out using a band saw (24).

3. Method according to claim 1 or 2, wherein, during the sawing, the activity (A) of the shavings occurring during the sawing is measured and is increased when predetermined boundary values of the gap (RS-R1) between the saw cut and the inner surface (6) are exceeded and is reduced when predetermined boundary values of the gap (RS-R1) between the saw cut and the inner surface (6) are undershot.

## Revendications

1. Procédé pour désassembler un conteneur (4) cylindrique creux activé d'une installation nucléaire, en particulier d'une cuve sous pression de réacteur, dont l'activité (A) sur la surface supérieure intérieure (6) est plus élevée que sur la surface supérieure extérieure (10) avec, dans une première phase, un désassemblage de portions de paroi (20) qui sont constituées en sections périphériques d'un segment de forme annulaire **caractérisé en ce que** dans une deuxième phase une zone de paroi (14) intérieure de la portion de paroi (20) est séparée d'une zone de paroi (16) extérieure par une coupe de scie dans le sens périphérique (26) .

2. Procédé selon la revendication 1 dans lequel la coupe de scie est effectuée avec une scie à ruban (24).

3. Dispositif selon la revendication 1 ou 2 dans lequel l'activité (A) des copeaux générés par la coupe de scie est mesurée pendant la coupe de scie et pour lequel l'espacement (RS-R1) du sciage est augmenté par rapport à la surface supérieure intérieure (6) en cas de dépassement des valeurs limites de consigne et l'espacement (RS-R1) du sciage est réduit par rapport à la surface supérieure intérieure (6) en cas de dépassement des valeurs limites de consigne.
